# FASCICULE DE BREVET EUROPEEN

(11) **EP 2 833 564 B1**
(45) Date de publication et mention de la délivrance du brevet: **13.09.2017**
(21) Numéro de dépôt: 14179408.1
(22) Date de dépôt: 31.07.2014
(51) Int. Cl.: H04B 7/185

(54) **Procédé de communication de données entre une pluralité d'aéronefs**
Verfahren zur Datenkommunikation zwischen mehreren Luftfahrzeugen
Method for communicating data between a plurality of aircrafts

(30) Priorité: 01.08.2013 FR 1301856
(43) Date de publication de la demande: 04.02.2015
(73) Titulaire: Thales, 92200 Neuilly Sur Seine (FR)
(72) Inventeur: Carrere, Patrice, 92622 Gennevilliers Cedex (FR)
(74) Mandataire: Lavoix

(56) Documents cités:
- EP-A1- 2 592 870
- EP-A2- 2 051 406
- US-A1- 2009 318 137

## Description

La présente invention concerne un procédé de communication de données entre une pluralité d'aéronefs. La présente invention se rapporte également à un ensemble d'aéronefs propres à la mise en oeuvre du procédé de communication.

Dans le domaine des communications aéronautiques, une bulle radio est définie par l'ensemble des plates-formes à portée radio les unes des autres. Lorsqu'une mission implique une pluralité de plates-formes ou la traversée de zones montagneuses impliquant des masquages géographiques, plusieurs bulles radio coexistent. Un hélicoptère en vol tactique dans le fond d'une vallée forme généralement une bulle radio isolée d'un certain nombre de plates-formes de la patrouille qui est liée à la présence de la montagne autour de l'hélicoptère.

Un relais radio entre les plates-formes est alors mis en oeuvre pour augmenter la portée des échanges entre plates-formes ou parer à des masquages géographiques. Lorsqu'un relais radio est mis en place, cela signifie qu'une plate-forme désignée a pour vocation de réémettre des données reçues dans le but que deux plates-formes qui ne sont pas à portée radio l'une de l'autre puissent Un exemple décrivant un réseau d'aéronefs est le document US2009/0318137. Toutefois, la présence d'un tel relais radio pose des problèmes dans le cadre des communications unicast et multicast de données sous forme de paquets IP ou de trames Ethernet. Le terme unicast définit une connexion réseau point à point, c'est-à-dire d'un émetteur vers un (seul) récepteur alors que le terme multicast (qui se traduit par l'expression « multidiffusion ») est une forme de diffusion d'un émetteur (source unique) vers un groupe de récepteurs. Les termes «diffusion multipoint» ou «diffusion de groupe» sont également employés.

En unicast, il est observé une réception multiple de données lorsqu'un aéronef appartient par intermittence à une bulle radio pour laquelle un relais est mis en oeuvre (l'aéronef n'est pas supposé être à portée des autres aéronefs de cette bulle radio). En multicast, une réception multiple de données se produit lorsqu'un ou plusieurs aéronefs sont à la fois à portée radio de l'aéronef émettant le flux de données multicast et d'une station relais. La réception multiple de données est d'autant plus problématique qu'elle implique un traitement spécifique au niveau applicatif (pour supprimer les données reçues plusieurs fois) alors que le monde applicatif est, par nature, agnostique des mécanismes de diffusion et de remise des données sous-jacents.

Il existe donc un besoin pour un procédé de communication de données entre une pluralité d'aéronefs impliquant moins de ressources applicatives pour sa mise en oeuvre.

A cet effet, l'invention a pour objet un procédé de communication de données entre une pluralité d'aéronefs d'un ensemble d'aéronefs, les aéronefs étant organisés selon une pluralité de réseaux de télécommunication, notamment radio, reliés entre eux par des stations relais, chaque réseau de télécommunication étant muni d'un identifiant propre au réseau, le procédé comprenant une étape d'ajout d'informations dans les données à émettre depuis un aéronef appartenant à un premier réseau d'aéronefs, les informations comprenant l'identifiant propre au premier réseau.

Suivant des modes de réalisation particuliers, le procédé comprend une ou plusieurs des caractéristiques suivantes, prise(s) isolément ou suivant toutes les combinaisons techniquement possibles :
- chaque aéronef est muni d'un identifiant propre, les informations comprenant l'identifiant propre de chaque aéronef auquel sont destinées les données à émettre.
- les informations comprennent une information relative à la nature unicast ou multicast de la communication à établir avec les données à émettre.
- chaque station relais comporte une unité relais entre un premier réseau d'aéronefs et un deuxième réseau d'aéronefs, le procédé comprenant une étape de modification des informations ajoutées dans les données, l'identifiant propre au premier réseau étant remplacé par l'identifiant propre au deuxième réseau, et une étape d'émission des données par l'unité relais lorsque la communication à établir est de nature multicast ou lorsque la communication à établir est de nature unicast et que l'aéronef auquel sont destinées les données à émettre appartient à un réseau différent du réseau dont l'identifiant propre est présent dans les données à émettre.
- les données comportent une couche de contrôle d'accès au support, l'étape d'ajout d'informations est mise en oeuvre par une encapsulation des informations au niveau de la couche de contrôle d'accès au support des données à émettre.
- le procédé comprend une étape d'émission des données par un aéronef appartenant au premier réseau d'aéronefs.
- le procédé comprend une étape de comparaison de les identifiants ajoutés dans les données avec les identifiants propres respectivement au réseau du deuxième aéronef et au deuxième aéronef.
- le procédé comprend une étape d'acception par le deuxième aéronef de réception des données émises lorsque les identifiants ajoutés dans les données d'une part et les identifiants propres respectivement au réseau du deuxième aéronef et au deuxième aéronef d'autre part sont identiques.
- le procédé comprend une étape de calcul du trajet le plus court à suivre pour acheminer les données d'un aéronef à un autre aéronef.
- chaque réseau de télécommunication est un réseau local virtuel.
- les données se présentent sous forme d'au moins une trame Ethernet et les informations sont encapsulées dans un champ de l'en-tête de la ou chaque trame Ethernet.

L'invention concerne aussi un ensemble d'aéronefs dans lequel les aéronefs sont organisés selon une pluralité de réseaux de télécommunication, notamment radio, reliés entre eux par des stations relais, chaque réseau de télécommunication étant muni d'un identifiant propre au réseau, l'ensemble des aéronefs étant adapté pour la mise en oeuvre du procédé de communication tel que précédemment décrit.

D'autres caractéristiques et avantages de l'invention apparaîtront à la lecture de la description qui suit de modes de réalisation de l'invention, donnés à titre d'exemple uniquement et en référence aux dessins qui sont :
- figure 1, une vue schématique d'un premier exemple d'ensemble d'aéronefs organisés en réseaux de communication ;
- figure 2, une vue schématique du premier exemple d'ensemble d'aéronefs en situation de communication unicast entre deux aéronefs d'un même réseau ;
- figure 3, une vue schématique du premier exemple d'ensemble d'aéronefs en situation de communication unicast entre deux aéronefs d'un réseau différent ;
- figure 4, une vue schématique du premier exemple d'ensemble d'aéronefs en situation de communication multicast ;
- figure 5, une vue schématique d'un deuxième exemple d'ensemble d'aéronefs organisés en réseaux de communication ;
- figure 6, une vue schématique du deuxième exemple d'ensemble d'aéronefs en situation de communication unicast entre deux aéronefs d'un même réseau ;
- figure 7, une vue schématique du deuxième exemple d'ensemble d'aéronefs en situation de communication unicast entre deux aéronefs d'un réseau différent ;
- figure 8, une vue schématique du deuxième exemple d'ensemble d'aéronefs en situation de communication multicast ;
- figure 9, une vue schématique d'un troisième exemple d'ensemble d'aéronefs organisés en réseaux de communication ;
- figure 10, une vue schématique des chemins de communication reliant le premier aéronef au huitième aéronef dans le cas du troisième exemple, et
- figure 11, une vue schématique du troisième exemple d'ensemble d'aéronefs en situation de communication unicast entre deux aéronefs d'un réseau différent.

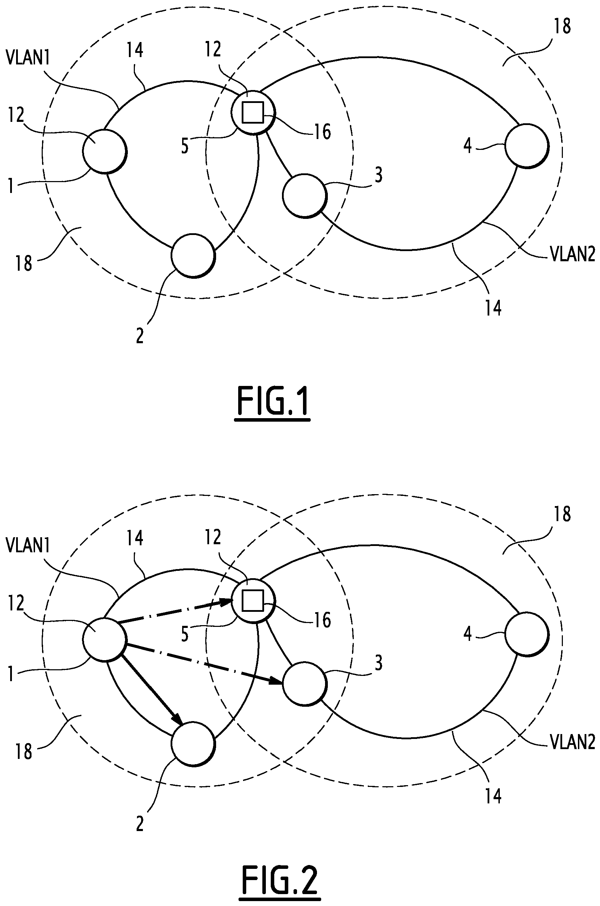

Un ensemble 10 d'aéronefs 12 comportant une pluralité d'aéronefs 12 est représenté à la figure 1.

Un aéronef 12 est un moyen de transport capable d'évoluer au sein de l'atmosphère terrestre. Un aéronef est une plate-forme aéronautique. A titre d'exemple, l'aéronef est un hélicoptère, un avion, notamment un avion de chasse, un avion de mission ou un drone. De manière schématique, chaque aéronef 12 est représenté par un cercle sur la figure 1.

Selon l'exemple de la figure 1, l'ensemble 10 comprend cinq aéronefs 12.

Les aéronefs 12 de l'ensemble 10 sont organisés selon une pluralité de réseaux 14 de télécommunication de type radio.

Il est entendu par l'expression « organisé » que chaque aéronef 12 appartient à au moins un réseau 14 de télécommunication. En outre, le terme « organisé » est lié à une affectation de chaque aéronef 12 à un réseau. Cette affectation est différente des bulles radio 18 qui résultent comme expliqué précédemment de la proximité de l'autre aéronef, de la présence ou non d'un obstacle... Pour marquer cette différence, dans la figure 1, les réseaux 14 au sens de l'invention apparaissent sous forme de trait plein reliant les aéronefs 12 alors que les bulles radio apparaissent sous forme d'un cercle en traits pointillés entourant les aéronefs 12 contenus dans la bulle radio 18 considérée.

Lorsque l'ensemble 10 des aéronefs 12 est utilisé pour effectuer une mission militaire, l'affectation d'un aéronef 12 à un réseau 14 particulier est déterminée lors de la préparation de mission et dépend des impératifs de la mission.

Par exemple, si trois aéronefs 12 doivent collaborer, dans le cadre de leur mission, les trois aéronefs 12 doivent être en communication directe (affectés au même réseau 14) ou via une unité de relais (affectés à des réseaux 14 distincts reliés par une unité de relais 16).

L'affectation d'un aéronef 12 au réseau 14 dépend également de la topologie des lieux survolés par les aéronefs 12. Notamment, la topologie des lieux survolés a des conséquences sur les aéronefs 12 qui sont à portée radio les unes des autres : à travers une montagne, les ondes radio ne sont pas transmises. Les aéronefs 12 à portée radio les uns des autres sont, de préférence, affectés à un même réseau 14.

L'affectation est réalisée par une unité particulière Cette unité est définie en préparation de mission et est unique pour l'ensemble 10. Plus spécifiquement, il s'agit d'un aéronef 12 de l'ensemble des aéronefs 12.

En variante, chaque aéronef 12 appartient à au plus deux réseaux 14.

Selon une variante, chaque aéronef 12 appartient à plus de deux réseaux 14.

De préférence, chaque aéronef 12 appartenant à au moins deux réseaux 14 est une station relais.

Par définition, une station relais, aussi dénommée relais ou plate-forme relayeuse, assure le relais entre deux réseaux 14. Pour assurer la fonction de station relais, de manière connue en soi, un aéronef 12 est pourvu de moyens permettant de relayer des données, appelé unité de relais 16 dans la suite. A titre d'exemple, l'unité relais 16 est un calculateur. En outre, chaque unité relais 16 est symbolisée par un rectangle sur la figure 1.

Un réseau 14 de télécommunication est un sous-ensemble d'aéronefs 12, c'est-à-dire que chaque réseau 14 comprend une partie des aéronefs 12 de l'ensemble 10. Les aéronefs 12 du sous-ensemble 10 sont géographiquement éloignés les uns des autres et sont interconnectés par des télécommunications qui permettent d'échanger des données entre les différents aéronefs 12.

Dans les exemples considérés, les télécommunications sont des télécommunications de type radio. Une télécommunication radio ou radiocommunication est une télécommunication effectuée dans l'espace au moyen d'ondes électromagnétiques.

De préférence comme c'est le cas pour l'ensemble 10 de la figure 1, chaque réseau 14 de télécommunication est un réseau 14 local virtuel, communément appelé VLAN. VLAN est l'acronyme de l'expression anglaise « Virtual Local Area Network ». Dans la suite, chaque réseau 14 de l'ensemble 10 est noté simplement réseau VLAN 14.

Un réseau VLAN 14 permet de séparer les flux radio et d'augmenter la sécurité. En effet, un réseau VLAN 14 est un réseau VLAN 14 logique indépendant et isolé supporté par le même réseau radio. Le seul moyen pour communiquer entre les aéronefs 12 appartenant à des réseaux VLAN 14 différents est alors de passer par une unité relais 16.

Chaque réseau VLAN 14 de communication étant muni d'un identifiant propre au réseau VLAN 14.

A titre d'exemple, un identifiant est un numéro spécifique au réseau. Selon l'exemple de la figure 1, les cinq aéronefs 12 sont organisés en deux réseaux VLAN 14. Au premier réseau VLAN 14 est associé le nombre 1 et au deuxième réseau VLAN 14 est associé le nombre 2.Parmi les aéronefs 12, seul le cinquième aéronef 12 est une station relais pourvue d'une unité relais 16 assurant le relais entre le premier réseau VLAN 14 et le deuxième réseau VLAN 14. Le premier réseau VLAN 14 comprend le premier aéronef 12, le deuxième aéronef 12 et le cinquième aéronef 12 tandis que le deuxième réseau VLAN 14 comprend le troisième aéronef 12, le quatrième aéronef 12 et le cinquième aéronef 12.

En attribuant un identifiant à chaque aéronef 12 similaire aux identifiants utilisés pour les deux réseaux VLAN 14, il peut ainsi être établi la table de correspondance suivante entre les identifiants :

| *Identifiant de l'aéronef 12* | *Identifiant du réseau VLAN 14 auquel appartient l'aéronef 12* |
|---|---|
| 1 | 1 |
| 2 | 1 |
| 3 | 2 |
| 4 | 2 |
| 5 | 1 et 2 |

L'unité relais 16 est munie de cette table de correspondance. Cela signifie, par exemple, que l'unité relais 16 comporte une mémoire propre à mémoriser une telle table de correspondance.

L'unité relais 16 est, en outre, propre à mettre à jour la table de correspondance. Une telle mise à jour est par exemple réalisée en définissant plusieurs tables de correspondance en phase de préparation de la mission. Ces différents tables correspondent aux déploiements des différentes phases de la mission (vol en groupe, première plateforme en éclaireur, deuxième et quatrième aéronefs en vol tactique au fond d'une vallée par exemple). Dans chacun des cas, il est défini s'il faut mettre en oeuvre un relais et quel aéronef le met en oeuvre et il est affecté des identifiants de réseaux à chaque aéronef 12 en fonction de ces choix. Il s'agit d'une méthode statique pour prendre en compte des évolutions topologiques planifiées. Le passage d'une table à une autre est commandé par l'aéronef chargé de l'affectation. D'autres modes de mise à jour sont envisageables comme des allocations dynamiques prenant en compte les bulles radio 18 réelles.

Il est d'ailleurs à noter que, dans l'exemple de la figure 1, deux bulles radio 18 coexistent : le premier aéronef 12, le deuxième aéronef 12, le troisième aéronef 12 et le cinquième aéronef 12 font partie d'une première bulle radio 18 alors que le troisième aéronef 12, le quatrième aéronef 12 et le cinquième aéronef 12 font partie d'une deuxième bulle radio 18.

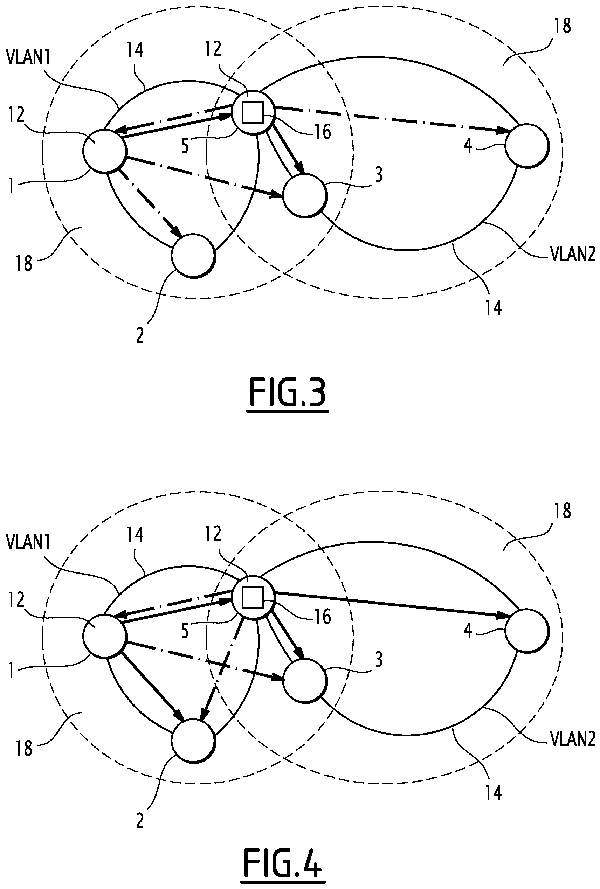

Le fonctionnement de l'ensemble 10 de la figure 1 est maintenant décrit en référence à la mise en oeuvre d'un procédé de communication de données entre deux aéronefs 12 dans les cas suivants : communication unicast entre deux aéronefs 12 d'un même réseau VLAN 14 (illustré par la figure 2), communication unicast entre deux aéronefs 12 d'un réseau VLAN 14 différent (illustré par la figure 3) et communication multicast (illustré par la figure 4).

Considérons d'abord le cas d'une communication unicast depuis le premier aéronef 12 vers le deuxième aéronef 12. Le premier aéronef 12 et le deuxième aéronef 12 appartiennent au premier réseau VLAN 14.

Le procédé de communication dans ce cas comprend l'ajout d'informations dans les données à émettre par le premier aéronef 12. Les informations comprennent l'identifiant du réseau VLAN 14 auquel appartient le premier aéronef 12.

En l'occurrence, les données à émettre correspondant à au moins une trame Ethernet. Ethernet est un protocole de réseau local à commutation de paquets. Ethernet est un protocole implémentant les couches liaison de données (data link layer) et physique (physical layer) du modèle OSI (selon les standards de réseaux informatiques IEEE 802.x). A titre d'exemple, il est supposé que l'ensemble des données à émettre correspond à une seule trame, l'extension à plusieurs trames étant immédiate.

L'ajout d'informations est mis en oeuvre par encapsulation des informations à émettre dans les trames Ethernet.

Selon une variante préférée, l'encapsulation des informations est mise en oeuvre au niveau de la sous-couche de contrôle d'accès au support.

La sous-couche de contrôle d'accès au support (Media Access Control en anglais ou MAC) est la moitié basse de la couche de liaison de données du modèle OSI (selon les standards de réseaux informatiques IEEE 802.x). Cette sous-couche assure la gestion de l'accès au support physique, elle se situe au-dessus de la couche physique (matérielle).

Plus précisément, il est proposé d'utiliser un champ optionnel de l'en-tête d'une trame Ethernet qui est appelé VLAN Identifier ou VLAN Id. Ce champ optionnel est prévu par la norme IEEE 802.1Q. Dans la suite, ce champ est noté simplement VID. En l'occurrence, il est ajouté l'identifiant « 1 » dans le champ VID. Pour simplifier dans la suite, il est noté VID = 1 pour signifier que le champ VID contient l'identifiant « 1 » correspondant au premier réseau VLAN 14.

La trame est ainsi marquée ou « taguée » avec les informations ajoutées par encapsulation.

Le procédé comporte ensuite l'émission de la trame marquée par le premier aéronef 12.

Le procédé comprend alors la réception de la trame par tous les aéronefs 12 à portée radio du premier aéronef 12. Ce sont d'après les compositions des bulles radio 18, le deuxième aéronef 12, le troisième aéronef 12 et le cinquième aéronef 12.

Le procédé comporte ensuite une étape de vérification par chaque aéronef 12 en réception des identifiants de la trame pour déterminer si l'aéronef 12 accepte ou refuse la trame. Dans la suite, on entend par « réception » le fait de capter des données et par « acceptation » ou « acceptation de réception », le choix d'envoyer des données captées vers les couches supérieures du modèle OSI pour traitement par les applications de l'aéronef 12.

Chaque aéronef 12 en réception vérifie d'abord que l'identifiant propre au réseau VLAN 14 auquel appartient l'aéronef 12 considéré est présent dans l'en-tête de la trame reçue. Plus précisément, il est vérifié pour le deuxième aéronef 12 que la trame comporte l'identifiant du premier réseau VLAN 14 (soit VID =1) et pour le troisième aéronef 12 que la trame comporte l'identifiant du deuxième réseau VLAN 14 (soit VID =2) et pour le cinquième aéronef 12 que la trame comporte l'identifiant du premier réseau VLAN 14 (soit VID = 1) ou l'identifiant du deuxième réseau VLAN (soit VID = 2).

Dans le cas du troisième aéronef 12, comme la trame ne comporte pas l'identifiant du deuxième réseau VLAN 14, le troisième aéronef 12 refuse de la trame émise par le premier aéronef 12. Ce refus est matérialisé sur la figure 2 par une flèche en traits mixtes.

Seuls le deuxième aéronef 12 et le cinquième aéronef 12 identifient un identifiant de réseau VLAN 14 acceptable. Le procédé comprend ensuite une vérification de l'adresse du destinataire. Comme la trame est destinée au deuxième aéronef 12, la trame comporte l'identifiant du deuxième aéronef 12.De ce fait, le cinquième aéronef 12 refuse la trame (voir flèche en traits mixtes sur le figure 2) tandis que le deuxième aéronef 12 accepte la trame. Cette acceptation est matérialisée par une flèche en trait plein sur la figure 2.

L'exemple de procédé illustré par la figure 2 correspond à une communication intra-réseau, ou plus spécifiquement, intra-VLAN.

Considérons ensuite le cas d'une communication unicast depuis le premier aéronef 12 vers le troisième aéronef 12. Le premier aéronef 12 et le troisième aéronef 12 appartiennent respectivement au premier réseau VLAN 14 et au deuxième réseau VLAN 14.

Le procédé de communication est similaire au procédé mis en oeuvre dans le cas de la figure 2. Seules les différences sont détaillées dans ce qui suit.

Le procédé comprend une étape d'encapsulation des informations dans une trame à émettre par le premier aéronef 12 au niveau de l'entête de la trame Ethernet. Les informations comprennent l'identifiant du réseau VLAN 14 auquel appartient le premier aéronef 12, à savoir VID = 1 en l'occurrence, ainsi que l'identifiant de l'aéronef 12 de destination, qui est le nombre 3.

Le procédé comporte alors l'émission d'au moins une trame marquée par le premier aéronef 12.

Lors de l'étape de vérification de la trame reçue, le deuxième aéronef 12 constate que l'identifiant est l'identifiant du premier réseau VLAN 14 mais que l'adresse du destinataire n'est pas celle du deuxième aéronef 12. De ce fait, le deuxième aéronef 12 refuse la trame émise par le premier aéronef 12. Ce refus est matérialisé sur la figure 3 par une flèche en traits mixtes.

Pour le troisième aéronef 12, similairement au cas de la figure 2, comme la trame ne comporte pas l'identifiant du deuxième réseau VLAN 14, le troisième aéronef 12 refuse la trame émise par le premier aéronef 12. Ce refus est matérialisé sur la figure 3 par une flèche en traits mixtes.

Au contraire, pour le cinquième aéronef 12, similairement au cas de la figure 2 pour le deuxième aéronef 12, comme la trame comporte l'identifiant du premier réseau VLAN 14 et que le cinquième aéronef 12 est une station relais, le procédé comprend l'acception par le cinquième aéronef 12 de la trame émise pour lecture. Cette acceptation est matérialisée sur la figure 3 par une flèche en trait plein.

Le procédé comprend alors la comparaison par l'unité relais 16 de la correspondance entre l'identifiant associé au réseau VLAN 14 auquel appartient l'aéronef 12 de destination et de l'identifiant du réseau VLAN 14 d'émission de la trame. Cette comparaison est effectuée à l'aide de la table de correspondance mémorisée dans l'unité relais 16.

En l'occurrence, l'identifiant associé au réseau VLAN 14 auquel appartient l'aéronef 12 de destination est l'identifiant du deuxième réseau VLAN 14 (réseau VLAN 14 auquel appartient le troisième aéronef 12) et l'identifiant du réseau VLAN 14 d'émission de la trame est l'identifiant du premier réseau VLAN 14. En termes de VID, cela se traduit par VID = 2 pour l'identifiant associé au réseau VLAN 14 auquel appartient l'aéronef 12 de destination et VID = 1 pour l'identifiant du réseau VLAN 14 d'émission de la trame.

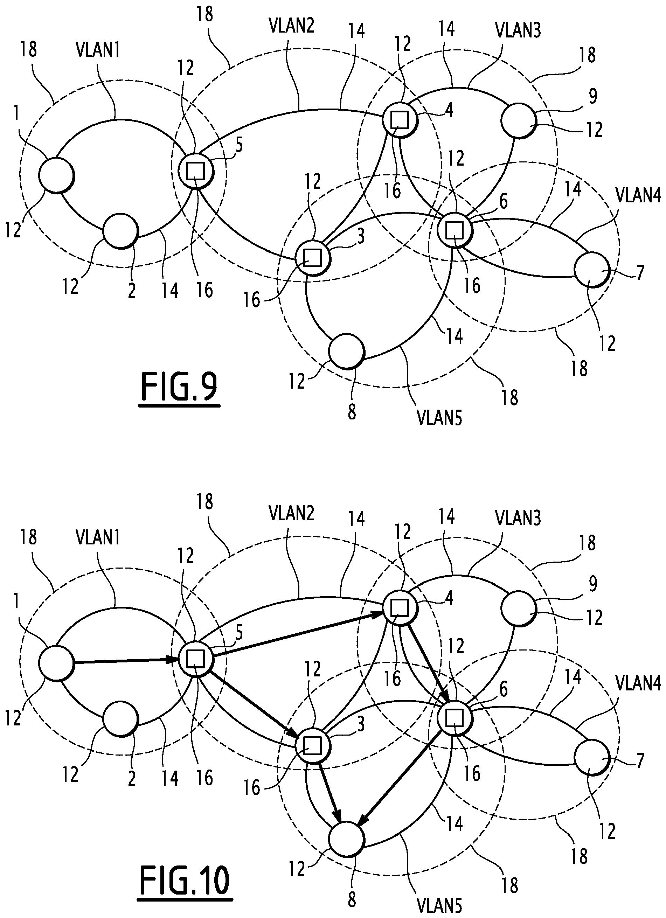

Les deux identifiants sont donc distincts. De ce fait, l'unité relais 16 relaye la trame émise dans le réseau VLAN 14 suivant. Ceci est un cas particulier du calcul de meilleur chemin dont un cas général est détaillé en référence aux figures 9 à 11.

Dans le cas où les deux identifiants sont identiques, l'unité relais 16 ne retransmet pas la trame reçue (cas d'une communication intra-VLAN décrit en référence à la figure 2).

Le procédé comporte ensuite la modification de la trame reçue par le cinquième aéronef 12. L'identifiant de la trame est modifiée pour que le nouvel identifiant soit celui du réseau VLAN 14 dans lequel l'unité relais 16 prévoit d'envoyer la trame. Dans ce cas, le nouvel identifiant est celui du deuxième réseau VLAN 14, soit VID = 2.

Le procédé comporte ensuite l'émission par l'unité relais 16 de la trame modifiée.

Pour le premier aéronef 12, comme la trame ne comporte plus l'identifiant du premier réseau VLAN 14 mais l'identifiant du deuxième réseau VLAN 14, le premier aéronef 12 refuse la trame relayée par l'unité relais 16. Ce refus est matérialisé sur la figure 3 par une flèche en traits mixtes. Il en est de même pour le deuxième aéronef 12.

Le quatrième aéronef 12 reçoit également la trame comportant l'identifiant du deuxième réseau VLAN 14. Mais, comme l'identifiant de l'aéronef 12 de destination est celle du troisième aéronef 12, le quatrième aéronef 12 refuse la trame relayée par l'unité relais 16. Ce refus est matérialisé sur la figure 3 par une flèche en traits mixtes.

Au contraire, pour le troisième aéronef 12, comme la trame comporte l'identifiant du deuxième réseau VLAN 14 et comme l'identifiant de l'aéronef 12 de destination est celui du troisième aéronef 12, le procédé comprend l'acception par le troisième aéronef 12 de la trame émise pour lecture. Cette acceptation est matérialisée sur la figure 3 par une flèche en trait plein.

L'exemple de procédé illustré par la figure 2 correspond à une opération inter-réseau communément appelée routage inter-VLAN. Le troisième aéronef 12 accepte une seule fois la trame alors que le troisième aéronef 12 reçoit deux trames en provenance du premier aéronef 12 soit directement soit via une réémission par le cinquième aéronef 12. Ainsi, il n'y a pas d'acceptation multiple ou inutile de données. Il en résulte que le procédé de communication implique moins de ressources applicatives pour sa mise en oeuvre.

Considérons ensuite le cas d'une communication multicast depuis le premier aéronef 12.

Le procédé de communication est similaire au procédé mis en oeuvre dans le cas de la figure 2. Seules les différences sont détaillées dans ce qui suit.

Le procédé comprend l'encapsulation d'informations dans une trame à émettre par le premier aéronef 12 au niveau de la sous-couche de contrôle d'accès. Les informations comprennent l'identifiant du réseau VLAN 14 auquel appartient le premier aéronef 12, à savoir VID = 1 en l'occurrence, ainsi que la nature de la communication, à savoir une communication multicast. En pratique, la nature de la communication est une adresse Ethernet multicast présente dans la trame du premier aéronef 12.

Le procédé comporte après l'émission d'au moins une trame marquée par le premier aéronef 12.

Similairement aux cas de communication unicast présentés en référence aux figures 2 et 3, comme la trame ne comporte pas l'identifiant du deuxième réseau VLAN 14, le troisième aéronef 12 refuse la trame émise par le premier aéronef 12. Ce refus est matérialisé sur la figure 4 par des flèches en traits mixtes.

Au contraire, comme la trame comporte l'identifiant du premier réseau VLAN 14, le deuxième aéronef 12 et le cinquième aéronef 12 acceptent la trame émise par le premier aéronef 12. Ces acceptations sont matérialisées sur la figure 4 par des flèches en trait plein.

L'unité relais 16 identifie que la communication est une communication de type multicast. De ce fait, l'unité relais 16 transmet la trame au réseau VLAN 14 qui n'est pas le réseau VLAN 14 d'émission. L'identifiant encapsulé dans la trame permet d'identifier ce réseau VLAN 14, qui est en l'occurrence le premier réseau VLAN 14.

L'unité relais 16 modifie la trame reçue par le cinquième aéronef 12. L'identifiant de la trame est modifiée de sorte que le nouvel identifiant soit celui du deuxième réseau VLAN 14, soit VID = 2.

Le procédé comporte alors l'émission par l'unité relais 16 de la trame modifiée.

Similairement aux cas de communication unicast présentés en référence aux figures 2 et 3, comme la trame ne comporte pas l'identifiant du premier réseau VLAN 14, le premier aéronef 12 et le deuxième aéronef 12 refusent la trame émise par le cinquième aéronef 12. Ces refus sont matérialisés sur la figure 4 par des flèches en traits mixtes.

Au contraire, comme la trame comporte l'identifiant du deuxième réseau VLAN 14, le troisième aéronef 12 et le quatrième aéronef 12 acceptent la trame émise par le cinquième aéronef 12. Ces acceptations sont matérialisées sur la figure 4 par des flèches en trait plein.

A l'issue de la communication multicast, bien que tous les aéronefs 12 soient à portée radio de l'émetteur ou pas, chaque aéronef 12 a accepté au plus une seule fois la trame d'origine émise par le premier aéronef 12. Plus précisément, le deuxième aéronef 12 a reçu la trame directement depuis le premier aéronef 12. Le troisième aéronef 12 a reçu la trame via le relais de l'unité relais 16 du cinquième aéronef 12. De même, le quatrième aéronef 12 a reçu la trame via le relais de l'unité relais 16 du cinquième aéronef 12. Le cinquième aéronef 12 a reçu la trame directement depuis le premier aéronef 12. Il n'y a pas de transmission multiple ou inutile de données. Il en résulte que le procédé de communication implique moins de ressources applicatives pour sa mise en oeuvre. Il en résulte que chaque station relais est «transparente». Que les aéronefs 12 appartiennent ou non à la même bulle radio 18 que la bulle radio 18 de l'aéronef 12 qui émet initialement la trame, chaque aéronef 12 n'accepte qu'une seule fois la trame. Rendre les stations relais « transparentes » revient virtuellement à faire en sorte que tous les aéronefs appartiennent à la même bulle radio 18.

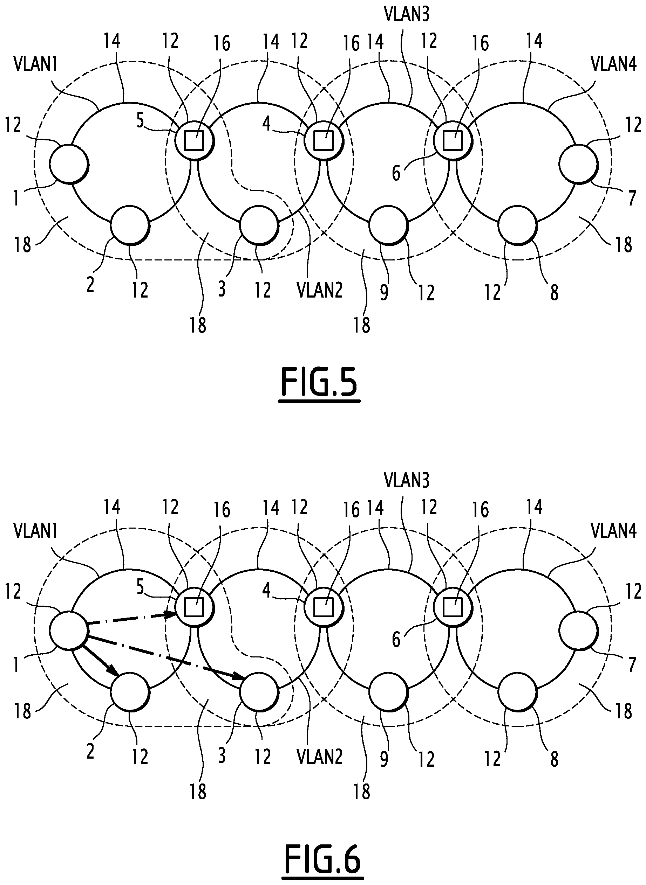

Un deuxième exemple d'ensemble 10 d'aéronefs 12 comportant une pluralité d'aéronefs 12 est représenté à la figure 5. L'ensemble 10 est similaire à l'ensemble 10 présenté en référence à la figure 1. Seules les différences sont soulignées dans ce qui suit.

Dans le cas de la figure 5, l'ensemble 10 comprend neuf aéronefs 12 répartis en quatre réseaux VLAN 14 de télécommunication distincts. Le quatrième aéronef 12, le cinquième aéronef 12 et le sixième aéronef 12 comprennent des stations relais.

Le premier réseau VLAN 14 comprend le premier aéronef 12, le deuxième aéronef 12 et le cinquième aéronef 12 ; le deuxième réseau VLAN 14 comprend le troisième aéronef 12, le quatrième aéronef 12 et le cinquième aéronef 12 ; le troisième réseau VLAN 14 comprend le quatrième aéronef 12, le sixième aéronef 12 et le neuvième aéronef 12 et le quatrième réseau VLAN 14 comporte le sixième aéronef 12, le septième aéronef 12 et le huitième aéronef 12.

Les stations relais du quatrième aéronef 12, du cinquième aéronef 12 et du sixième aéronef 12 sont ainsi munies de la table de correspondance suivante :

| *Numéro de l'aéronef 12* | *Identifiant du réseau VLAN 14 associé* |
|---|---|
| 1 | 1 |
| 2 | 1 |
| 3 | 2 |
| 4 | 2 et 3 |
| 5 | 1 et 2 |
| 6 | 3 et 4 |
| 7 | 4 |
| 8 | 4 |
| 9 | 3 |

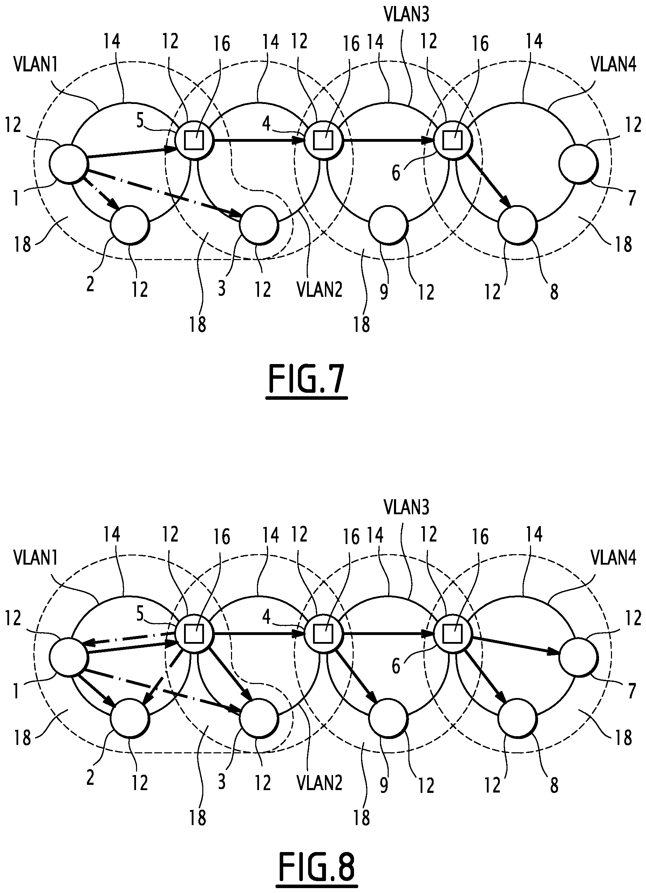

Le fonctionnement de l'ensemble 10 de la figure 5 est maintenant décrit en référence à la mise en oeuvre d'un procédé de communication de données entre deux aéronefs 12 dans les cas suivants : communication unicast entre deux aéronefs 12 d'un même réseau VLAN 14 (illustré par la figure 6), communication unicast entre deux aéronefs 12 d'un réseau VLAN 14 différent (illustré par la figure 7) et communication multicast (illustré par la figure 8). Ces exemples permettent d'illustrer qu'il n'y a pas d'acceptation multiple ou inutile de données par les aéronefs.

Pour le cas d'un routage inter-VLAN illustré par la figure 6, un procédé identique à celui décrit en référence à la figure 2 est mis en oeuvre.

Considérons ensuite le cas d'une communication unicast depuis le premier aéronef 12 vers le huitième aéronef 12. Le premier aéronef 12 et le huitième aéronef 12 appartiennent respectivement au premier réseau VLAN 14 et au quatrième réseau VLAN 14. Le procédé comprend l'encapsulation des informations dans les trames à émettre par le premier aéronef 12 au niveau de l'entête de la trame Ethernet. Les informations comprennent l'identifiant du réseau VLAN 14 auquel appartient le premier aéronef 12, à savoir VID = 1 en l'occurrence, ainsi que l'identifiant de l'aéronef 12 de destination, qui est le nombre 8.

Le procédé comporte alors l'émission d'au moins une trame marquée par le premier aéronef 12.

Bien que la trame comporte l'identifiant du premier réseau VLAN 14, le deuxième aéronef 12 refuse la trame parce que l'identifiant de l'aéronef 12 de destination est celui de la huitième aéronef 12 et pas celui de la deuxième aéronef 12.

Comme la trame ne comporte pas l'identifiant du deuxième réseau VLAN 14, le troisième aéronef 12 refuse la trame émise par le premier aéronef 12. Ce refus est matérialisé sur la figure 7 par une flèche en traits mixtes. Au contraire, pour le cinquième aéronef 12, comme la trame comporte l'identifiant du premier réseau VLAN 14 et que le cinquième aéronef 12 est une station relais, le procédé comprend une étape d'acception par le cinquième aéronef 12 de la trame émise pour lecture. Cette acceptation est matérialisée sur la figure 7 par la flèche en trait plein.

Le procédé comprend ensuite la comparaison par l'unité relais 16 de la correspondance entre l'identifiant associé au réseau VLAN 14 auquel appartient l'aéronef 12 de destination et de l'identifiant du réseau VLAN 14 d'émission de la trame. Cette comparaison est effectuée à l'aide de la table de correspondance mémorisée dans l'unité relais 16.

En l'occurrence, l'identifiant associé au réseau VLAN 14 auquel appartient l'aéronef 12 de destination est l'identifiant du quatrième réseau VLAN 14 (réseau VLAN 14 auquel appartient le huitième aéronef 12) et l'identifiant du réseau VLAN 14 d'émission de la trame est l'identifiant du premier réseau VLAN 14. En termes de VID, cela se traduit par VID = 4 pour l'identifiant associé au réseau VLAN 14 auquel appartient l'aéronef 12 de destination et VID = 1 pour l'identifiant du réseau VLAN 14 d'émission de la trame.

Les deux identifiants sont donc distincts. Cela implique que l'unité relais 16 a à relayer la trame émise dans au moins un aéronef 12 du réseau VLAN 14 suivant. Ceci est un cas particulier du calcul de meilleur chemin dont un cas général est détaillé en référence aux figures 9 à 11.

Le procédé comporte alors l'émission par l'unité relais 16 de la trame modifiée au quatrième aéronef 12.

Le quatrième aéronef 12 transmet ensuite la trame au sixième aéronef 12 en changeant le VID en 3.

De même, le sixième aéronef 12 transmet ensuite la trame au huitième aéronef 12 en changeant le VID en 4.

Comme la trame comporte l'identifiant du quatrième réseau VLAN 14 et comme l'identifiant de l'aéronef 12 de destination est l'identifiant du huitième aéronef 12, le huitième aéronef 12 accepte la trame émise par le sixième aéronef 12 (qui comprend les données de la trame émise par le premier aéronef) pour lecture. Cette acceptation est matérialisée sur la figure 7 par une flèche en trait plein.

Similairement aux cas précédents, il n'y a pas d'acceptation inutile de données par les aéronefs 12. Il en résulte que le procédé de communication implique moins de ressources applicatives pour sa mise en oeuvre.

Pour le cas d'une communication multicast illustrée par la figure 8, un procédé identique à celui décrit en référence à la figure 4 est mis en oeuvre.

De nouveau, il n'y a pas d'acceptation multiple ou inutile de données par les aéronefs 12. Il en résulte que le procédé de communication implique moins de ressources applicatives pour sa mise en oeuvre.

Un troisième exemple d'ensemble 10 d'aéronefs 12 comportant une pluralité d'aéronefs 12 est représenté à la figure 9. L'ensemble 10 est similaire à l'ensemble 10 présenté en référence à la figure 1. Seules les différences sont soulignées dans ce qui suit.

Dans le cas de la figure 9, l'ensemble 10 comprend neuf aéronefs 12 répartis en cinq réseaux VLAN 14 de télécommunication distincts. Le troisième aéronef 12, le quatrième aéronef 12, le cinquième aéronef 12 et le sixième aéronef 12 sont des stations relais comprenant chacune une unité de relais 16.

Le premier réseau VLAN 14 comprend le premier aéronef 12, le deuxième aéronef 12 et le cinquième aéronef 12 ; le deuxième réseau VLAN 14 comprend le troisième aéronef 12, le quatrième aéronef 12 et le cinquième aéronef 12 ; le troisième réseau VLAN 14 comprend le quatrième aéronef 12, le sixième aéronef 12 et le neuvième aéronef 12 ; le quatrième réseau VLAN 14 comporte le sixième aéronef 12, le septième aéronef 12 et le cinquième réseau VLAN 14 comporte le troisième aéronef 12, le sixième aéronef 12 et le huitième aéronef 12. Comme l'indique la correspondance entre les cercles en traits pleins et les cercles en pointillés, les cinq bulles radio 18 et les réseaux VLAN comprennent dans l'exemple spécifique de la figure 9 les mêmes aéronefs.

Les unités relais 16 du troisième aéronef 12, du quatrième aéronef 12, du cinquième aéronef 12 et du sixième aéronef 12 sont ainsi munies de la table de correspondance suivante :

| *Numéro de l'aéronef 12* | *Identifiant du réseau VLAN 14 associé* |
|---|---|
| 1 | 1 |
| 2 | 1 |
| 3 | 2 et 5 |
| 4 | 2 et 3 |
| 5 | 1 et 2 |
| 6 | 3, 4 et 5 |
| 7 | 4 |
| 8 | 5 |
| 9 | 3 |

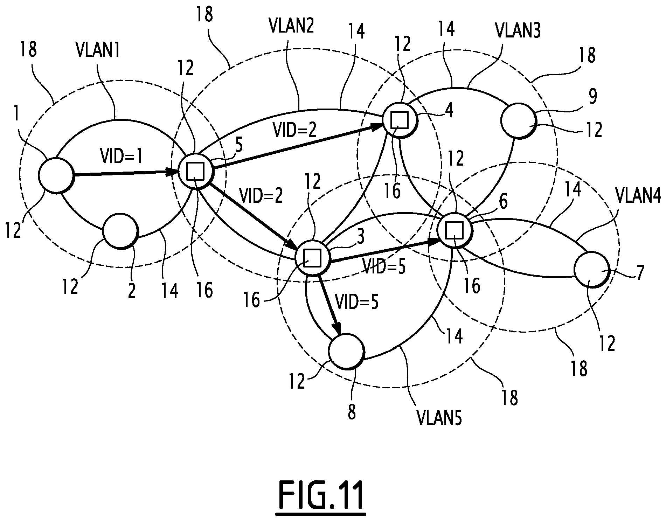

Comme les exemples des figures 5 à 8 ont permis d'illustrer qu'il n'y a pas d'acceptation multiple ou inutile de données par les aéronefs même en présence de plusieurs stations relais, l'exemple de la figure 9 ne sera pas utilisé pour montrer ce point même si cela reste vrai. Par contre, en référence aux figures 10 et 11, un procédé de communication dans lequel les stations relais effectuent un calcul de meilleur chemin pour minimiser les ressources radio impliquées dans la communication de la trame. Comme expliqué précédemment, le calcul du meilleur chemin peut s'appliquer également dans tous les cas illustrés au travers des différentes figures 1 à 8. Chaque unité relais 16 calcule le meilleur chemin. Ce calcul est trivial dans les premiers exemples des figures 1 à 4 en présence de deux réseaux VLAN 14. Il est simple dans le cadre des figures 5 à 8 car il n'existe qu'un seul chemin possible entre deux aéronefs 12. Dans les figures 10 et 11, il est présenté un cas plus complexe lorsque plusieurs chemins existent. Ces exemples permettent également de mettre en évidence que, de préférence, le calcul du meilleur chemin est un algorithme générique basé sur la table de correspondance qui est mis en oeuvre par toutes les unités relais 16 indépendamment de l'organisation des aéronefs 12 en réseaux VLAN 14.

La figure 10 correspond au cas d'une communication unicast depuis le premier aéronef 12 vers le huitième aéronef 12. Le premier aéronef 12 et le huitième aéronef 12 appartiennent respectivement au premier réseau VLAN 14 et au cinquième réseau VLAN 14.

La figure 10 montre que deux chemins sont envisageables. Selon le premier chemin indiqué en traits pointillés, la trame suit le trajet suivant : cinquième aéronef 12 - quatrième aéronef 12 - sixième aéronef 12 - huitième aéronef 12. Selon le deuxième chemin indiqué en traits pleins, la trame suit le trajet suivant : cinquième aéronef 12 - troisième aéronef 12 - huitième aéronef 12. Le deuxième chemin minimise le nombre de relais entre le premier aéronef 12 et le huitième aéronef 12. Le deuxième chemin est donc le chemin le plus court.

Une unité relais 16 est en mesure de déterminer le meilleur chemin sur la base de la table de correspondance. Lorsqu'une unité relais 16 reçoit une trame avec pour adresse de destination l'adresse de destination du huitième aéronef 12, l'unité relais 16 est capable de déterminer si l'aéronef 12 comprenant l'unité relais 16 fait partie du meilleur chemin ou non. Dans le cas où l'aéronef 12 est sur le meilleur chemin, l'unité relais 16 réémet la trame dans le réseau VLAN 14 qui suit sur le meilleur chemin de l'unité relais 16. Dans le cas contraire, l'aéronef 16 se contente de rejeter la trame. Cela est illustré schématiquement par la figure 11 dans laquelle les quatrième aéronef 12 et sixième aéronef 12 rejettent la trame parce que ces aéronefs 12 ne font pas partie du meilleur chemin entre le premier aéronef 12 et le huitième aéronef 12.

Le procédé proposé permet donc de minimiser le nombre de relais, ce qui minimise le nombre de réémission entre le premier aéronef 12 et le huitième aéronef 12. Il en résulte que le nombre de ressources impliquées pour établir une communication entre le premier aéronef 12 et le huitième aéronef 12 est minimisé.

Le calcul de meilleur chemin se généralise aussi au cas d'une communication multicast. Dans ce cas, une règle de diffusion est choisie pour éviter de transmettre deux fois la même trame au même aéronef 12 par deux chemins différents, ce qui conduirait à des acceptations multiples de trame. Par exemple, il est choisi comme règle de diffusion de toujours repartir du réseau VLAN 14 ayant l'identifiant le plus petit lorsque l'unité relais 16 effectue le calcul de meilleur chemin. D'autres règles de diffusion sont aussi envisageables.

Ainsi, dans tous les modes de réalisations proposés, la mise en oeuvre du procédé n'implique pas d'utiliser des éléments additionnels, comme des ressources radio dédiées. Un poste émetteur radio, des fréquences spécifiques sont des exemples de telles ressources radio. Ceci rend la mise en oeuvre du procédé plus aisé. Cet avantage est d'autant plus important dans le contexte d'une préparation de mission, dans laquelle les aéronefs 12 ont des ressources radio limitées.

En outre, dans tous les modes de réalisations proposés, la mise en oeuvre du procédé de communication de données implique moins de ressources applicatives.

Dans un mode de réalisation préféré, il est propose de mettre en oeuvre des réseaux VLAN 14 pour cloisonner logiquement des sous-ensembles d'aéronefs 12 sur le même support physique de la forme d'onde.

Le procédé propose ainsi l'utilisation d'une technique répandue dans le monde des réseaux VLAN 14 d'entreprises adaptée à un domaine différent qui est celui des relais radio. Cette adaptation est spécifique. Ainsi, les VID sont alloués dynamiquement au lieu de statiquement. Plus précisément, les VID sont alloués en fonction de la topologie des réseaux VLAN 14. En outre, le routage inter-VLAN est un routage de niveau 2 basé sur l'adresse Ethernet du destinataire et le VID, à comparer au routage IP usuel.

## Revendications

1. Procédé de communication de données entre une pluralité d'aéronefs (12) d'un ensemble (10) d'aéronefs (12), les aéronefs (12) étant organisés selon une pluralité de réseaux (14) de télécommunication, notamment radio, reliés entre eux par des stations relais, chaque réseau (14) de télécommunication étant muni d'un identifiant propre au réseau (14), le procédé comprenant :
- une étape d'ajout d'informations dans les données à émettre depuis un aéronef (12) appartenant à un premier réseau (14) d'aéronefs (12), les informations comprenant l'identifiant propre au premier réseau (14).

2. Procédé selon la revendication 1, dans lequel chaque aéronef (12) est muni d'un identifiant propre, les informations comprenant l'identifiant propre de chaque aéronef (12) auquel sont destinées les données à émettre.

3. Procédé selon la revendication 1 ou 2, dans lequel les informations comprennent une information relative à la nature unicast ou multicast de la communication à établir avec les données à émettre.

4. Procédé selon les revendications 1 à 3, dans lequel chaque station relais comporte une unité relais (16) entre un premier réseau (14) d'aéronefs (12) et un deuxième réseau (14) d'aéronefs (12), le procédé comprenant :
- une étape de modification des informations ajoutées dans les données, l'identifiant propre au premier réseau (14) étant remplacé par l'identifiant propre au deuxième réseau (14), et
- une étape d'émission des données par l'unité relais (16) lorsque la communication à établir est de nature multicast ou lorsque la communication à établir est de nature unicast et que l'aéronef (12) auquel sont destinées les données à émettre appartient à un réseau (14) différent du réseau (14) dont l'identifiant propre est présent dans les données à émettre.

5. Procédé selon l'une quelconque des revendications 1 à 4, dans lequel les données comportent une couche de contrôle d'accès au support, l'étape d'ajout d'informations est mise en oeuvre par une encapsulation des informations au niveau de la couche de contrôle d'accès au support des données à émettre.

6. Procédé selon l'une quelconque des revendications 1 à 5 dans leur dépendance avec la revendication 2, comportant, en outre :
- une étape d'émission des données par un aéronef (12) appartenant au premier réseau (14) d'aéronefs (12),
- une étape de comparaison des identifiants ajoutés dans les données avec les identifiants propres respectivement au réseau (14) du deuxième aéronef (12) et au deuxième aéronef (12), et
- une étape d'acception par le deuxième aéronef (12) de réception des données émises lorsque les identifiants ajoutés dans les données d'une part et les identifiants propres respectivement au réseau (14) du deuxième aéronef (12) et au deuxième aéronef (12) sont identiques.

7. Procédé de communication selon l'une quelconque des revendications 1 à 6, comportant, en outre, une étape de calcul du trajet le plus court à suivre pour acheminer les données d'un aéronef (12) à un autre aéronef (12).

8. Procédé de communication selon l'une quelconque des revendications 1 à 7, dans lequel chaque réseau (14) de télécommunication est un réseau (14) local virtuel.

9. Procédé de communication selon l'une quelconque des revendications 1 à 8, dans lequel les données se présentent sous forme d'au moins une trame Ethernet et les informations sont encapsulées dans un champ de l'en-tête de la ou chaque trame Ethernet.

10. Ensemble (10) d'aéronefs (12) dans lequel les aéronefs (12) sont organisés selon une pluralité de réseaux (14) de télécommunication, notamment radio, reliés entre eux par des stations relais, chaque réseau (14) de télécommunication étant muni d'un identifiant propre au réseau (14), l'ensemble (10) des aéronefs (12) étant adapté pour la mise en oeuvre du procédé de communication selon l'une quelconque des revendications 1 à 9.

## Patentansprüche

1. Verfahren zur Datenkommunikation zwischen einer Mehrzahl von Luftfahrzeugen (12) eines Verbundes (10) von Luftfahrzeugen (12), wobei die Luftfahrzeuge (12) gemäß einer Mehrzahl von Telekommunikationsnetzen (14), insbesondere Funktelekommunikationsnetzen, organisiert sind, die untereinander durch Relaisstationen verbunden sind, wobei jedes Telekommunikationsnetz (14) mit einer dem Netz (14) zugeeigneten Kennung ausgerüstet ist, wobei das Verfahren umfasst:
- einen Schritt des Zufügens von Informationen zu den Daten, die von einem zu einem ersten Netz (14) von Luftfahrzeugen (12) gehörenden Luftfahrzeug (12) zu senden sind, wobei die Informationen die dem ersten Netz (14) eigene Kennung umfassen.

2. Verfahren nach Anspruch 1, bei dem jedes Luftfahrzeug (12) mit einer eigenen Kennung ausgerüstet ist, wobei die Informationen die Kennung umfassen, die jedem Luftfahrzeug (12) zugeeignet ist, für das die zu sendenden Daten vorgesehen sind.

3. Verfahren nach Anspruch 1 oder 2, bei dem die Informationen mit den zu sendenden Daten eine Information hinsichtlich der Unicast- oder Multicast-Natur der herzustellenden Kommunikation umfassen.

4. Verfahren nach den Ansprüchen 1 bis 3, bei dem jede Relaisstation eine Relaiseinheit (16) zwischen einem ersten Netz (14) von Luftfahrzeugen (12) und einem zweiten Netz (14) von Luftfahrzeugen (12) aufweist, wobei das Verfahren umfasst:
- einen Schritt der Änderung der den Daten zugefügten Informationen, wobei die dem ersten Netz (14) eigene Kennung durch die dem zweiten Netz (14) eigene Kennung ersetzt wird, und
- einen Schritt des Sendens der Daten durch die Relaiseinheit (16), wenn die herzustellende Kommunikation von der Multicast-Natur ist oder wenn die herzustellende Kommunikation der von Unicast-Natur ist und das Luftfahrzeug (12), für das die zu sendenden Daten vorgesehen sind, zu einem Netz (14) gehört, das unterschiedlich zu dem Netz (14) ist, dessen zugehörige Kennung in den zu sendenden Daten vorhanden ist.

5. Verfahren nach einem beliebigen der Ansprüche 1 bis 4, bei dem die Daten eine Medienzugriffs-Steuerschicht aufweisen, wobei der Schritt des Hinzufügens von Informationen durch eine Einkapselung der Informationen in der Medienzugriffs-Steuerschicht der zu sendenden Daten durchgeführt wird.

6. Verfahren nach einem beliebigen der Ansprüche 1 bis 5 in ihrer Abhängigkeit von Anspruch 2, außerdem umfassend:
- einen Schritt des Sendens von Daten von einem Luftfahrzeug (12), das zu dem ersten Netz (14) von Luftfahrzeugen (12) gehört,
- einen Schritt des Vergleichs der Kennungen, die den Daten zugefügt wurden, mit den Kennungen, die jeweils dem Netz (14) des zweiten Luftfahrzeugs (12) und dem zweiten Luftfahrzeug (12) eigen sind, und
- einen Schritt des Annehmens des Empfangs der gesendeten Daten durch das zweite Luftfahrzeug (12), wenn die den Daten zugefügten Kennungen einerseits und die jeweils dem Netz (14) des zweiten Luftfahrzeugs (12) und dem zweiten Luftfahrzeug (12) eigenen Kennungen identisch sind.

7. Kommunikationsverfahren nach einem beliebigen der Ansprüche 1 bis 6, außerdem einen Schritt des Berechnens des kürzesten zu verfolgenden Weges, um die Daten von einem Luftfahrzeug (12) zu einem anderen Luftfahrzeug (12) zu transportieren, umfassend.

8. Kommunikationsverfahren nach einem beliebigen der Ansprüche 1 bis 7, bei dem jedes Telekommunikationsnetz (14) ein lokales virtuelles Netz (14) ist.

9. Kommunikationsverfahren nach einem beliebigen der Ansprüche 1 bis 8, bei dem die Daten sich in Form mindestens eines Ethernet-Rahmens darstellen und die Informationen in einem Kopffeld des oder jedes Ethernet-Rahmens eingekapselt sind.

10. Luftfahrzeugverbund (12, 10), bei dem die Luftfahrzeuge (12) gemäß einer Mehrzahl von Telekommunikationsnetzen (14), insbesondere Funktelekommunikationsnetzen, organisiert sind, die untereinander durch Relaisstationen verbunden sind, wobei jedes Telekommunikationsnetz (14) mit einer dem Netz (14) eigenen Kennung ausgerüstet ist, wobei der Luftfahrzeugverbund (12, 10) für die Durchführung des Kommunikationsverfahrens nach einem beliebigen der Ansprüche 1 bis 9 ausgebildet ist.

## Claims

1. A data communication method between a plurality of aircraft (12) of a set (10) of aircraft (12), the aircraft (12) being organized according to a plurality of telecommunications networks (14), notably radio telecommunications networks, connected together through relay stations, each telecommunications network (14) being provided with an identifier specific to the network (14), the method comprising:
- a step for adding pieces of information into the data to be emitted from an aircraft (12) belonging to a first network (14) of aircraft (12), the pieces of information comprising the identifier specific to the first network (14).

2. The method according to claim 1, wherein each aircraft (12) is provided with a specific identifier, the pieces of information comprising the specific identifier of each aircraft (12) for which the data to be emitted are intended.

3. The method according to claim 1 or 2, wherein the pieces of information comprise a piece of information relating to the unicast or multicast nature of the communication to be established with the data to be emitted.

4. The method according to claims 1 to 3, wherein each relay station includes a relay unit (16) between a first network (14) of aircraft (12) and a second network (14) of aircraft (12), the method comprising:
- a step for modifying the pieces of information added into the data, the identifier specific to the first network (14) being replaced with the identifier specific to the second network (14), and
- a step for emitting the data through the relay unit (16) when the communication to be established is of a multicast nature or when the communication to be established is of a unicast nature and the aircraft (12) for which the data to be emitted are intended belongs to a network (14) different from the network (14) whose specific identifier is present in the data to be emitted.

5. The method according to any of claims 1 to 4, wherein the data include a media access control layer, the step for adding pieces of information is applied by encapsulation of the pieces of information at the media access control layer of the data to be emitted.

6. The method according to any of claims 1 to 5 in their dependency with claim 2, further including:
- a step for emitting the data by an aircraft (12) belonging to the first network (14) of aircraft (12),
- a step for comparing the identifiers added in the data with the identifiers respectively specific to the network (14) of the second aircraft (12) and to the second aircraft (12), and
- a step for having the second aircraft (12) accept receiving the emitted data when the identifiers added into the data on the one hand and the identifiers respectively specific to the network (14) of the second aircraft (12) and to the second aircraft (12) are identical.

7. The communication method according to any of claims 1 to 6, further including, a step for calculating the shortest path to be followed for forwarding the data from one aircraft (12) to another aircraft (12).

8. The communication method according to any of claims 1 to 7, wherein each telecommunication network (14) is a virtual local network (14).

9. The communication method according to any of claims 1 to 8, wherein the data appear in the form of at least one Ethernet frame and the pieces of information are encapsulated in a field of the header of said or each Ethernet frame.

10. A set (10) of aircraft (12) wherein the aircraft (12) are organized according to a plurality of telecommunication networks, notably radio telecommunication networks (14) connected to each other through relay stations, each telecommunication network (14) being provided with an identifier specific to the network (14), the set (10) of aircraft (12) being adapted for applying the communication method according to any of claims 1 to 9.
